# FASCICULE DE BREVET EUROPEEN

(11) **EP 4 536 991 B1**
(45) Date de publication et mention de la délivrance du brevet: **12.08.2026**
(21) Numéro de dépôt: 23736174.6
(22) Date de dépôt: 12.06.2023
(51) Int. Cl.: F16H 1/28, F02C 7/36, F16H 57/08, F16H 57/04

(54) **TRAIN D'ENGRENAGES COMPACT POUR REDUCTEUR DE TURBOMACHINE**
KOMPAKTES ZAHNRADGETRIEBE FÜR TURBOMASCHINENUNTERSETZUNGSGETRIEBE
COMPACT GEAR TRAIN FOR TURBOMACHINE REDUCER

(30) Priorité: 13.06.2022 FR 2205685
(43) Date de publication de la demande: 16.04.2025
(73) Titulaire: Safran Transmission Systems, 92700 Colombes (FR)
(72) Inventeur: MOULY, Guillaume, Pierre, 77550 MOISSY-CRAMAYEL (FR)
(74) Mandataire: Cabinet Beau de Loménie
(86) Numéro de dépôt international: PCT/FR2023/050844
(87) Numéro de publication internationale: WO 2023/242506

(56) Documents cités:
- CN-U- 201 787 001
- DE-B3- 102017 120 336
- US-A1- 2021 310 417

## Description

### Domaine Technique

La présente invention concerne le domaine des trains d'engrenages, et en particulier des trains d'engrenages pour réducteur mécanique de turbomachine.

### Technique antérieure

Les engrenages sont des ensembles mécaniques dans lesquels du mouvement est apte à être transmis, et éventuellement transformé, entre deux éléments solides engrenés. Leur engrènement peut être assuré par contact, par friction, ou encore par champ magnétique, et l'engrènement par contact peut normalement être assuré avec des dentures, qui peuvent être par exemple droites ou inclinées, voire hélicoïdales. Les engrenages peuvent être utilisés pour transformer un mouvement rotatif en un mouvement linéaire ou vice-versa, par exemple avec un engrenage en crémaillère, mais surtout pour transformer un premier mouvement rotatif en un deuxième mouvement rotatif qui soit différent du premier mouvement rotatif en vitesse et/ou sens de rotation. Il est ainsi notamment possible d'utiliser au moins un engrenage, ou plusieurs engrenages formant ensemble un train d'engrenages, dans un réducteur mécanique pour transformer la rotation plus rapide d'un arbre d'entrée en une rotation plus lente d'un arbre de sortie.

Un domaine d'utilisation particulier des réducteurs mécaniques est celui des turbomachines. En effet, les turbomachines, et en particulier les moteurs à turbine à gaz, peuvent avoir des vitesses de rotation comparativement élevées qu'il peut convenir de réduire pour une utilisation pratique. Ainsi, dans les turboréacteurs à double flux (en anglais : « turbofans »), un entrainement direct de la soufflante par une turbine peut limiter le diamètre maximal de la soufflante, et donc le taux de dilution du turboréacteur, puisque la vitesse de rotation de la soufflante avec la turbine peut être tel que des vitesses transsoniques soient rapidement atteintes en bout de pale de soufflante, et cela même avec des diamètres modérés. Il a donc déjà été proposé d'intercaler un réducteur mécanique entre une turbine et une soufflante pour que cette dernière soit entrainée en rotation à une vitesse sensiblement inférieure de celle de la turbine l'entrainant. Pour des raisons analogues, des réducteurs mécaniques ont aussi été proposés pour d'autres turbomachines. Ainsi, dans le domaine de la propulsion aéronautique, il est courant d'incorporer un réducteur mécanique entre une turbine et une hélice propulsive dans un turbopropulseur, ou entre une turbine et un rotor sustentateur dans un turbomoteur. L'incorporation d'un réducteur mécanique dans une turbomachine est également courante dans d'autres domaines, comme par exemple la propulsion terrestre ou navale ou la génération électrique.

Dans plusieurs de ces domaines, et notamment dans le domaine de la propulsion aéronautique, il peut être avantageux d'avoir un réducteur mécanique particulièrement compact, mais offrant un rapport de réduction élevé. Une classe de trains d'engrenages offrant des rapports de réduction comparativement élevés avec un encombrement relativement réduit est celle des trains d'engrenages avec un solaire, une couronne disposée coaxialement autour du solaire, et un porte-satellites avec des satellites engrenés avec le solaire et la couronne, comme divulgué par exemple dans la demande de brevet français avec le numéro de publication FR 2 928 976 A1. Pour offrir des rapports de réduction particulièrement élevés, chaque satellite peut avoir au moins deux dentures de différents diamètres, l'une engrenée avec le solaire et l'autre avec la couronne. Un réducteur mécanique pour turbomachine comportant un train d'engrenages avec une telle configuration a été divulgué par exemple dans les publications de demande de brevet européen EP 3 726 031 A1 et EP 3 361 122 A1 et dans la demande de brevet français avec le numéro de publication FR 3 008 463 A1.

Dans un tel train d'engrenages, il peut être avantageux d'accroitre le nombre de satellites afin de distribuer entre eux le couple transmis par le train d'engrenages. Toutefois, lorsque l'encombrement radial du train d'engrenages est restreint, l'interférence entre les satellites limite leur nombre. Afin d'éviter cela, il a été proposé, notamment dans la publication de demande de brevet européen EP 1 113 193 A2, d'avoir une première pluralité de satellites et une deuxième pluralité de satellites dont les dentures de plus grand diamètre soient décalées axialement par rapport à celles de la première pluralité de satellites. Toutefois, dans ce train d'engrenages, cela implique des porte-à-faux différents pour les dentures des deux pluralités de satellites, ce qui peut causer des couples de flexion et de torsion dans les satellites, et rendre plus difficile l'équilibrage du train d'engrenages. Un autre train d'engrenages est divulgué dans le brevet allemand DE 102017120336 B3, ledit train d'engrenages comportant un solaire ayant un axe central, une couronne disposée coaxialement autour du solaire,un porte-satellites, et une pluralité de satellites, dans laquelle chaque satellite est soutenu par le porte-satellites et comporte une première denture et deux deuxièmes dentures décalées l'une par rapport à l'autre dans une direction axiale parallèle audit axe central, la première denture étant engrenée avec la couronne et ayant un premier diamètre médian, et chacune des deuxièmes dentures étant engrenée avec le solaire et ayant un deuxième diamètre médian supérieur au premier diamètre médian.

### Exposé de l'invention

Un premier aspect de la présente invention concerne un train d'engrenages pour réducteur mécanique de turbomachine. Ce train d'engrenages comporte un solaire ayant un axe central, une couronne disposée coaxialement autour du solaire, un porte-satellites, et une première et une deuxième pluralité de satellites dans lesquelles chaque satellite est soutenu par le porte-satellites. Chaque satellite comporte au moins une première denture et deux deuxièmes dentures décalées l'une par rapport à l'autre dans une direction axiale parallèle audit axe central. Chacune des premières dentures est engrenée avec la couronne et a un premier diamètre médian, et chacune des deuxièmes dentures est engrenée avec le solaire et a un deuxième diamètre médian supérieur au premier diamètre médian. Afin de permettre un enchevêtrement des deuxièmes dentures, les deuxièmes dentures de la deuxième pluralité de satellites sont disposées, dans ladite direction axiale, entre les deuxièmes dentures de la première pluralité de satellites.

Ainsi, grâce à l'enchevêtrement des deuxièmes dentures, qui sont celles de plus grand diamètre, il devient possible de combiner un rapport de réduction élevé et un grand nombre de satellites et donc une grande capacité de transmission de puissance du train d'engrenages. Néanmoins, cet arrangement permet aussi de minimiser les porte-à-faux et les couples en torsion et flexion dans chaque satellite.

Les revendications dépendantes définissent des modes particuliers de réalisation de l'invention.

Pour faciliter l'équilibrage du train d'engrenages, les deux deuxièmes dentures de chaque satellite peuvent en particulier être disposées symétriquement par rapport à un plan transversal perpendiculaire à l'axe central.

Au moins un desdits satellites peut comporter une seule première denture, qui soit centrée sur le plan transversal. Il est toutefois aussi envisageable qu'au moins un desdits satellites comporte deux premières dentures, qui peuvent alors être disposées symétriquement par rapport au plan transversal.

Lesdites premières dentures peuvent être droites. Afin de permettre leur engrènement correct avec la couronne, celle-ci peut présenter aussi au moins une denture droite correspondante.

Alternativement, toutefois, lesdites premières dentures peuvent être hélicoïdales. Dans ce cas, pour équilibrer les forces axiales sur les satellites, chaque satellite peut comporter deux desdites premières dentures, inclinées dans des directions opposées. Par ailleurs, afin de permettre leur engrènement correct avec la couronne, celle-ci peut présenter aussi des dentures hélicoïdales correspondantes. Une unique première denture en chevron est toutefois aussi envisageable sur chaque satellite, ainsi qu'une denture correspondante sur la couronne.

Les deuxièmes dentures des satellites de la première pluralité de satellites et/ou les deuxièmes dentures des satellites de la deuxième pluralité de satellites peuvent aussi être droites. Afin de permettre leur engrènement correct avec le solaire, celui-ci peut présenter aussi des dentures droites correspondantes.

Alternativement, toutefois, les deuxièmes dentures des satellites de la première pluralité de satellites et/ou les deuxièmes dentures des satellites de la deuxième pluralité de satellites peuvent aussi être droites peuvent aussi être hélicoïdales. Dans ce cas, pour équilibrer les forces axiales sur les satellites, les deuxièmes dentures de chaque satellite des première et/ou deuxième pluralités de satellites peuvent être inclinées dans des directions opposées. Par ailleurs, afin de permettre leur engrènement correct avec le solaire, celui-ci peut présenter aussi des dentures hélicoïdales correspondantes.

Chaque satellite des première et deuxième pluralités de satellites peut être monté libre en rotation autour d'un axe correspondant à l'aide d'un palier respectif, pouvant notamment être un palier à roulements, quoique d'autres types de palier, en particulier les paliers hydrostatiques, soient également envisageables.

Chaque satellite des première et deuxième pluralités de satellites comporte au moins deux parties fixées l'une à l'autres en rotation avec des profils non-axisymétriques complémentaires. Ces profils non-axisymétriques peuvent notamment être des profils polygonaux à angles arrondis, tels que p.ex. des profils trilobés comme les profils P3G suivant la norme DIN 32711, particulièrement adaptés pour solidariser en rotation des pièces non soumises à un glissement axial, quoique d'autres profils non-axisymétriques, tels que par exemple un profil quadrilobé P4C suivant la norme DIN 32712 ou un profil cannelé, sont également envisageables. Chaque satellite peut également comporter des éléments de maintien, tels que par exemple des écrous, pour maintenir ensemble axialement les au moins deux parties.

Un deuxième aspect de la présente invention concerne un réducteur mécanique comprenant le train d'engrenages suivant le premier aspect, au moins un arbre d'entrée couplé mécaniquement en rotation à l'un parmi le solaire, la couronne, et le porte-satellites, et un arbre de sortie couplé mécaniquement en rotation à un autre parmi le solaire, la couronne et le porte-satellites.

Un troisième aspect de la présente invention concerne une turbomachine comportant le réducteur mécanique suivant le deuxième aspect, au moins une turbine et un dispositif rotatif, ainsi que l'utilisation du réducteur mécanique suivant le deuxième aspect dans une telle turbomachine. Dans cette turbomachine, l'au moins une turbine peut être couplée mécaniquement en rotation à l'au moins un arbre d'entrée du réducteur et le dispositif rotatif peut être couplé mécaniquement en rotation à l'arbre de sortie. En particulier, le dispositif rotatif peut être une soufflante, afin de former ainsi un turboréacteur à double flux avec soufflante à réducteur. Il est toutefois également envisageable que le dispositif rotatif soit une hélice propulsive ou un rotor sustentateur, voire même une roue propulsive, une transmission hydraulique ou un générateur électrique.

### Brève description des dessins

L'objet de la présente invention et ses avantages seront mieux compris à la lecture de la description détaillée faite ci-après de modes de réalisation donnés à titre d'exemples non limitatifs. Cette description fait référence aux pages de figures annexées, sur lesquelles :
[Fig. 1] La figure 1 est une représentation schématique d'une turbomachine avec un réducteur mécanique.
[Fig. 2] La figure 2 représente schématiquement un réducteur mécanique suivant un premier mode de réalisation.
[Fig. 3] La figure 3 est une vue de détail d'un porte-satellites et d'un système de lubrification du réducteur mécanique de la figure 2.
[Fig. 4] La figure 4 illustre schématiquement un profil non-axisymétrique de type P3G, d'un type pouvant servir à solidariser en rotation entre elles au moins deux parties distinctes de chaque satellite du réducteur mécanique de la figure 4.
[Fig. 5] La figure 5 illustre schématiquement l'orientation des dentures des satellites du réducteur mécanique de la figure 2.
[Fig. 6] La figure 6 illustre schématiquement l'orientation des dentures des satellites d'un réducteur mécanique suivant un deuxième mode de réalisation.
[Fig. 7] La figure 7 illustre l'arrangement des paliers des satellites du réducteur mécanique de la figure 6.
[Fig. 8] La figure 8 illustre schématiquement un réducteur mécanique suivant un troisième mode de réalisation.
[Fig. 9] La figure 9 illustre schématiquement l'orientation des dentures de satellites du réducteur mécanique de la figure 8.
[Fig. 10] La figure 10 illustre schématiquement un réducteur mécanique suivant un quatrième mode de réalisation.
[Fig. 11] La figure 11 illustre schématiquement une turbomachine avec un réducteur mécanique suivant un cinquième mode de réalisation.
[Fig. 12] La figure 12 illustre schématiquement le réducteur mécanique suivant le cinquième mode de réalisation.

### Description des modes de réalisation

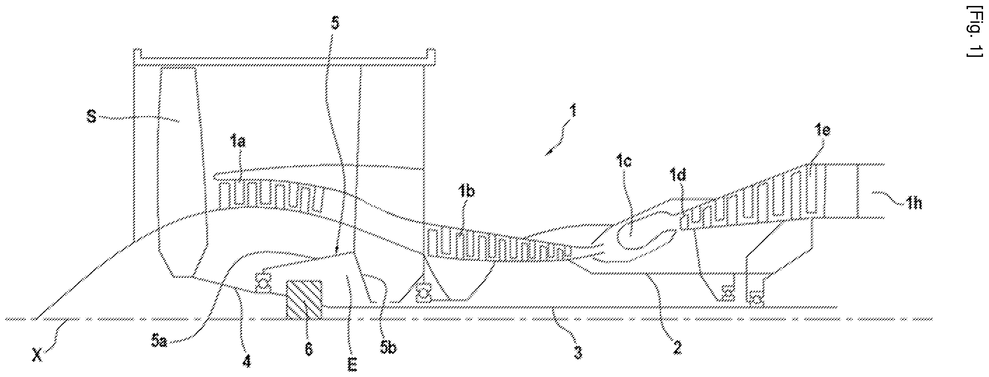

Comme illustré sur la figure 1, une turbomachine 1 peut prendre la forme d'un turboréacteur à double flux comportant, de manière classique, une soufflante S, un compresseur basse pression 1a, un compresseur haute pression 1b, une chambre de combustion 1c, pouvant être annulaire, une turbine haute pression 1d, une turbine basse pression 1e et une tuyère d'échappement 1h. Le compresseur haute pression 1b et la turbine haute pression 1d peuvent être mécaniquement reliés en rotation par un arbre haute pression 2 et former ainsi avec lui un corps haute pression (HP). Le compresseur basse pression 1a et la turbine basse pression 1e peuvent être mécaniquement reliés en rotation par un arbre basse pression 3 et former ainsi avec lui un corps basse pression (BP).

Pour son entraînement, la soufflante S peut être solidaire en rotation d'un arbre de soufflante 4 mécaniquement relié en rotation à l'arbre basse pression 3 à travers un réducteur mécanique 6. Ce réducteur mécanique 6 peut être, par exemple, de type planétaire, épicycloïdal ou différentiel. Grâce à ce réducteur mécanique 6, il est donc possible d'entrainer la soufflante S à une vitesse de rotation inférieure à celle de l'arbre basse pression 3, le compresseur basse pression 1a et la turbine basse pression 1e, permettant ainsi que la soufflante S ait un plus grand diamètre et offre ainsi un taux de dilution plus élevé.

Comme illustré sur la figure 1, le réducteur 6 peut être positionné dans une partie avant de la turbomachine 1, en direction amont par rapport aux corps basse pression et haute pression. Des arrangements alternatifs, disposant le réducteur 6 dans une partie arrière, voire même une partie intermédiaire de la turbomachine, sont toutefois envisageables. Une structure fixe formant un carter moteur ou stator 5, et pouvant comprendre, comme illustré, une partie amont 5a et une partie aval 5b, peut être agencée de manière à former une enceinte E entourant le réducteur 6. Cette enceinte E peut être, comme illustré, fermée en amont par des joints au niveau d'un palier permettant la traversée de l'arbre de soufflante 4, et en aval par des joints au niveau de la traversée de l'arbre basse pression 3.

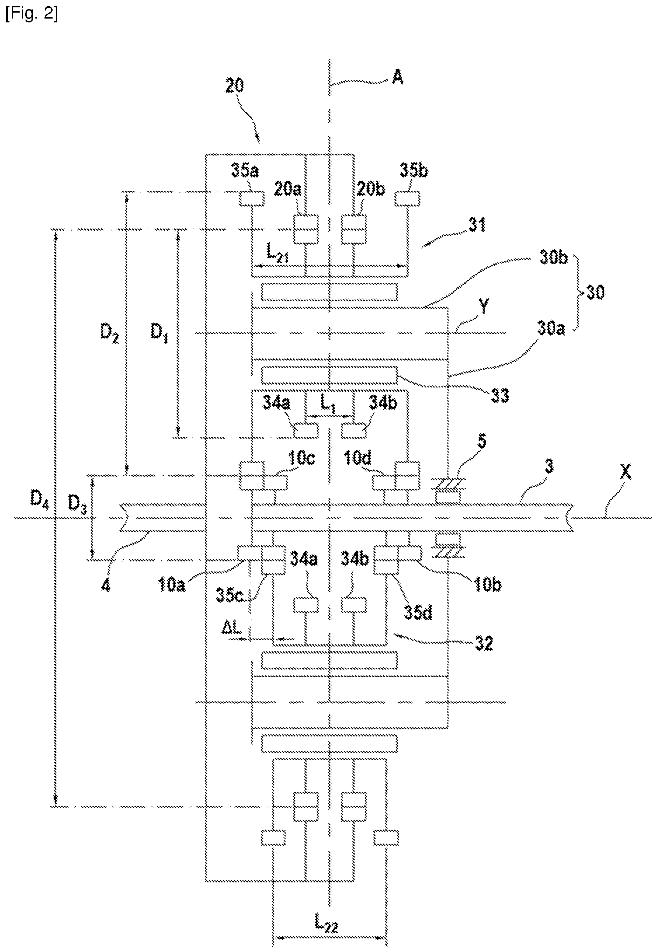

Suivant un premier mode de réalisation, illustré sur la figure 2, le réducteur mécanique 6 peut être un réducteur planétaire avec un train d'engrenages comprenant un solaire 10 solidaire en rotation de l'arbre basse pression 3, une couronne 20 disposée coaxialement autour du solaire 10, avec le même axe central X que celui-ci, et solidaire de l'arbre de soufflante 4 en rotation, et un porte-satellites 30 solidaire du carter 5 et donc fixe. L'axe central X commun du solaire 10 et de la couronne 20 peut être aligné avec un axe de rotation des arbres haute pression 2 et basse pression 3. Les couplages en rotation entre le solaire 10 et l'arbre basse pression 3 et/ou entre la couronne 20 et l'arbre de soufflante 4 peuvent donc s'effectuer, par exemple, par l'intermédiaire de cannelures.

Le train d'engrenages du réducteur mécanique 6 peut aussi comprendre deux ensembles de satellites 31, 32 portés par le porte-satellites 30 et distribués autour de l'axe central X, par exemple suivant des intervalles angulaires sensiblement identiques. Chaque satellite 31, 32 peut être monté libre en rotation autour d'un axe Y correspondant, pouvant notamment être sensiblement parallèle à l'axe central X, à l'aide d'un palier 33 respectif. Chaque satellite 31, 32 peut comporter deux premières dentures 34a,34b, d'un premier diamètre médian D₁, engrenées avec deux dentures correspondantes 20a, 20b dans la couronne 20. Les premières dentures 34a, 34b de chaque satellite 31,32 peuvent être décalées l'une par rapport à l'autre dans la direction de l'axe Y, avec un décalage axial L₁. En particulier, afin notamment d'assurer un bon équilibrage des forces sur les satellites 31, 32, lesdites premières dentures 34a, 34b peuvent avoir sensiblement la même largeur et être disposées symétriquement par rapport à un plan de symétrie transversal A.

Les satellites 31 d'un premier ensemble de satellites 31 et les satellites 32 d'un deuxième ensemble de satellites 32 peuvent être disposés de manière alternée autour du solaire 10. Chaque satellite 31 du premier ensemble de satellites 31 peut comporter, à part les deux premières dentures 34a, 34b, deux deuxièmes dentures 35a, 35b, d'un deuxième diamètre médian D₂, engrenées avec des dentures correspondantes 10a, 10b du solaire 10. Les dentures 10a, 10b du solaire 10 peuvent avoir un troisième diamètre médian D₃ inférieur au deuxième diamètre médian D₂, tandis que les dentures 20a, 20b de la couronne 20 peuvent avoir un quatrième diamètre médian D₄ supérieur au premier diamètre médian D₁, afin d'obtenir un rapport de réduction entre les vitesses de rotation du solaire 10 et de la couronne 20. Le deuxième diamètre médian D₂ peut être supérieur au premier diamètre médian D₁, de manière à obtenir un rapport de réduction plus élevé entre les vitesses de rotation du solaire 10 et de la couronne 20. Les deuxièmes dentures 35a, 35b de chaque satellite 31 du premier ensemble de satellites 31 peuvent aussi être décalées l'une par rapport à l'autre dans la direction de l'axe Y. En particulier, afin notamment d'assurer un bon équilibrage des forces sur les satellites 31, lesdites deuxièmes dentures 35a, 35b peuvent aussi avoir sensiblement la même largeur et être disposées symétriquement par rapport au plan de symétrie transversal A avec, entre elles, un décalage axial L₂₁ supérieur au décalage axial L₁ entre les premières dentures 34a, 34b, de manière à être disposées axialement à l'extérieur ces premières dentures 34a, 34b.

Dans ce premier mode de réalisation, chaque satellite 32 du deuxième ensemble de satellites 36 peut aussi comporter, à part les deux premières dentures 34a, 34b, deux deuxièmes dentures 35c, 35d avec le même deuxième diamètre médian D₂. Comme les deuxièmes dentures 35a,35b des satellites 31 du premier ensemble, les deuxièmes dentures 35c, 35d des satellites 32 du deuxième ensemble peuvent aussi être engrenées avec des dentures 10c, 10d correspondantes du solaire 10. Les deuxièmes dentures 35c, 35d de chaque satellite 32 du deuxième ensemble de satellites 32 peuvent aussi être décalées l'une par rapport à l'autre dans la direction de l'axe Y. En particulier, afin notamment d'assurer un bon équilibrage des forces sur les satellites 31, lesdites deuxièmes dentures 35c, 35d de chaque satellite 32 du deuxième ensemble de satellites 32 peuvent aussi avoir sensiblement la même largeur et être disposées symétriquement par rapport au plan de symétrie transversal A. Le décalage axial L₂₂ entre les deux deuxièmes dentures 35c, 35d de chaque satellite 32 du deuxième ensemble de satellites 32 peut aussi être supérieur au décalage axial L₁ entre les premières dentures 34a, 34b, de manière à ce que les premières dentures 34a, 34b soient aussi disposées entre les deuxièmes dentures 35c, 35d de la deuxième pluralité de satellites 32, mais toutefois être inférieur au décalage axial L₂₁ entre les deuxièmes dentures 35a, 35b de chaque satellite 31 du premier ensemble de satellites 31, de manière à ce que les deuxièmes dentures 35c, 35d des satellites 32 du deuxième ensemble de satellites 32 soient disposées, en direction axiale, entre les deuxièmes dentures 35a, 35b des satellites 31 du premier ensemble de satellites 31. On peut ainsi obtenir, entre les deuxièmes dentures 35a, 35b des satellites 31 du premier ensemble et les deuxièmes dentures 35c, 35d des satellites 32 du deuxième ensemble, un décalage axial ΔL, égal à la moitié de la différence entre les décalages axiaux L₂₁ et L₂₂, qui permet de rapprocher les axes Y des satellites 31, 32 des deux ensembles, sans collision entre les deuxièmes dentures 35a-35d de satellites 31, 32 adjacents, et donc de distribuer la charge mécanique entre un plus grand nombre de satellites 31, 32 avec un encombrement radial restreint.

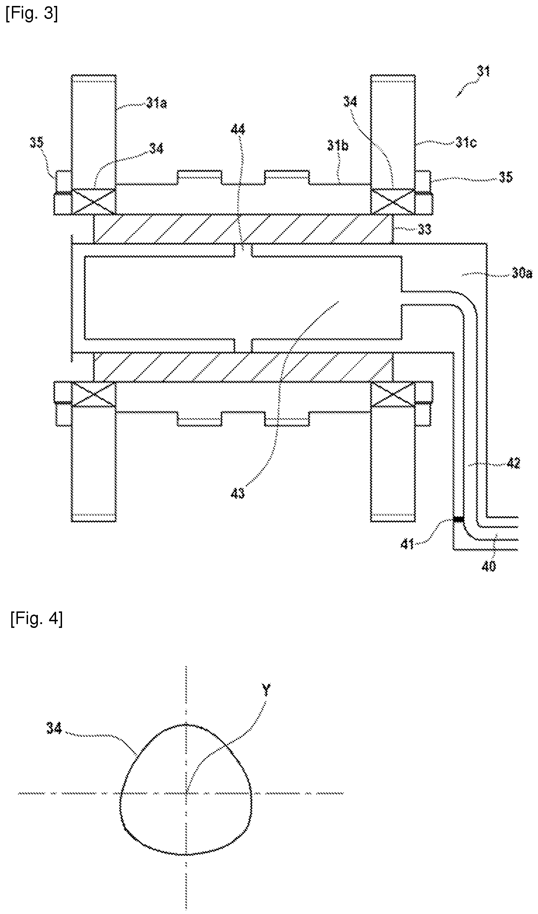

Comme illustré en détail sur la figure 3, chaque palier 33, qui peut être par exemple à roulements ou hydrostatique, peut être monté sur un axe 30b du porte-satellites 30, de telle manière que chaque satellite 31 ou 32 soit soutenu internement autour d'un des axes 30b par le palier 33 correspondant. Dans ce cas, tous les axes 30b du porte-satellites 30 peuvent être positionnés les uns par rapport aux autres à l'aide d'un ou plusieurs châssis structurels 30a du porte-satellites 30. Pour des raisons de fonctionnement, de montage, de fabrication, de contrôle, de réparation et/ou de rechange les axes 30b et le châssis 30a du porte-satellites 30 peuvent être séparables en plusieurs pièces. Pour assurer la lubrification du réducteur 6, celui-ci peut comprendre un distributeur 40 de fluide lubrifiant avec des injecteurs 41 pour lubrifier les engrenages et des bras 42 débouchant, à travers des cavités tampons 43 dans les axes 30b du porte-satellites, sur des bouches d'alimentation 44 des paliers 33 pour lubrifier ces derniers. Un fluide lubrifiant peut donc suivre l'acheminement illustré par les flèches de la figure 3 pour lubrifier paliers et engrenages.

En outre, afin de faciliter l'assemblage du train d'engrenages, chaque satellite 31, 32 peut comporter au moins deux, de préférence trois parties 31a,31b,31c fixées les unes aux autres en rotation, par exemple avec des profils non-axisymétriques 34 complémentaires emboîtés, qui peuvent notamment être des profils trilobés P3G suivant la norme DIN 32711, comme celui illustré sur la figure 4. Les trois parties 31a,31b,31c peuvent être maintenues axialement avec des écrous 35.

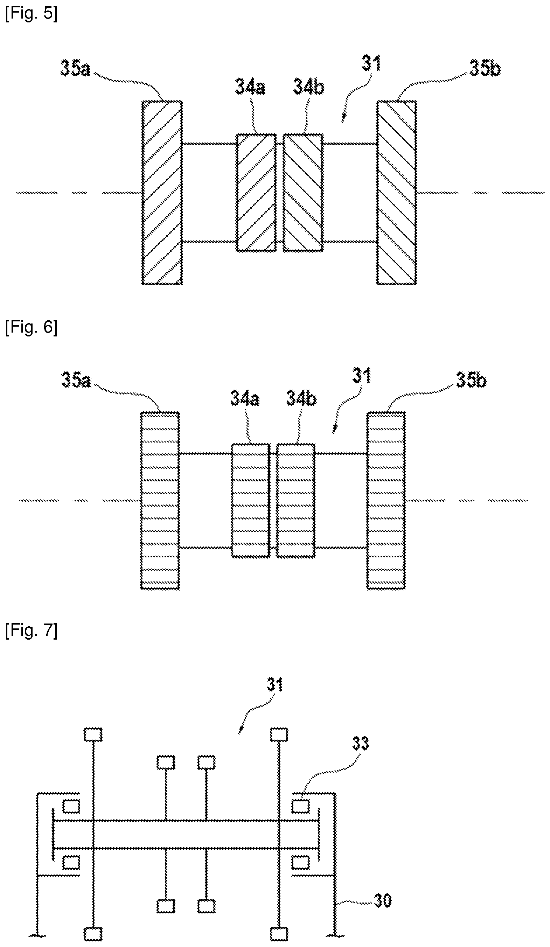

Dans ce premier mode de réalisation, les dentures peuvent être des dentures hélicoïdales. Comme illustré sur la figure 5, les deux premières dentures 34a, 34b de chaque satellite 31, 32 peuvent être inclinées en directions opposées, en particulier de manière symétrique pour obtenir un équilibre de forces axiales dans chaque satellite 31, 32. En conséquence, pour obtenir un engrènement correct, les dentures correspondantes 20a, 20b dans la couronne 20 peuvent avoir les mêmes inclinaisons. De manière analogue, les deux deuxièmes dentures 35a-35d de chaque satellite 31, 32 peuvent aussi être inclinées en directions opposées, en particulier de manière symétrique pour obtenir un équilibre de forces axiales dans chaque satellite 31, 32. En conséquence, pour obtenir un engrènement correct, les dentures correspondantes 10a-10d sur le solaire 10 peuvent aussi avoir les mêmes inclinaisons.

Il est néanmoins aussi envisageable qu'au moins certaines de toutes ces dentures soient des dentures droites. Ainsi, dans un deuxième mode de réalisation, illustré sur la figure 6, l'ensemble des dentures 34a,34b et 35a-35d de chaque satellite 31,32 peuvent être des dentures droites, tout comme les dentures correspondantes sur le solaire 10 et dans la couronne 20. Dans ce cas, les quatre dentures correspondantes sur le solaire 10 pourraient être remplacées par une unique denture traversante 10a de largeur suffisante pour engrener avec les deuxièmes dentures 35a-35d de chaque satellite 31, 32. Il est aussi envisageable que les satellites 31 et 32 soient soutenus à leurs extrémités axiales par des paliers 33 externes, comme illustré sur la figure 7, plutôt que par des paliers internes, comme dans le premier mode de réalisation. Dans ce deuxième mode de réalisation, les autres éléments du réducteur 6 peuvent être identiques ou au moins équivalents à ceux du premier mode de réalisation et arrangés aussi de la même manière ou d'une manière analogue. Ils reçoivent en conséquence les mêmes signes de référence sur les figures 6 et 7 que sur les figures précédentes.

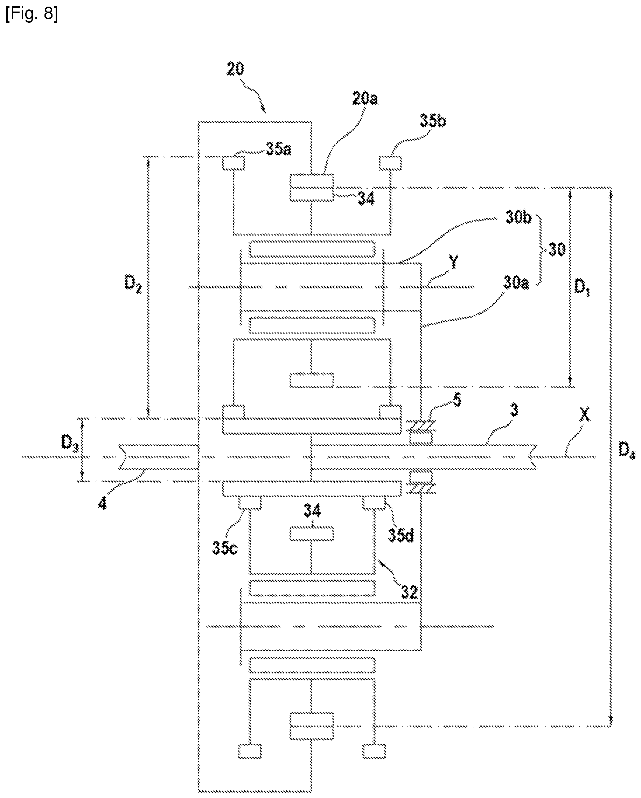

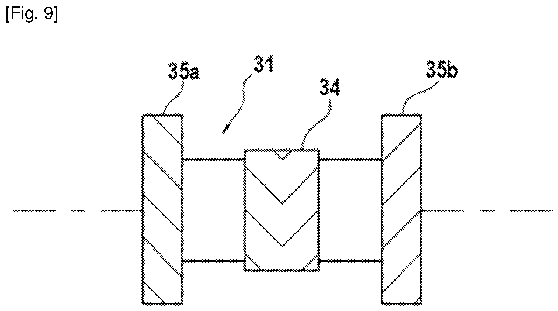

Comme les deux premières dentures de chaque satellite sont adjacentes, il est également envisageable, dans un troisième mode de réalisation, illustré sur la figure 8, de les remplacer par une seule première denture 34, pouvant être réalisée d'un seul tenant, centrée sur le plan transversal de symétrie A. Dans ce cas, cette première denture 34 de chaque satellite 32 peut être en chevron, comme illustré sur la figure 8. Alternativement, toutefois, elle pourrait être une denture droite, comme dans le deuxième mode de réalisation. Comme illustré sur la figure 8, les premières dentures 34 des satellites 31 de ce troisième mode de réalisation pourraient être engrenées sur une unique denture 20a correspondante sur la couronne 20. Dans ce troisième mode de réalisation, les autres éléments du réducteur 6 peuvent aussi être identiques ou au moins équivalents à ceux des modes de réalisation précédents et arrangés aussi de la même manière ou d'une manière analogue. Ils reçoivent en conséquence les mêmes signes de référence sur les figures 8 et 9 que sur les figures précédentes.

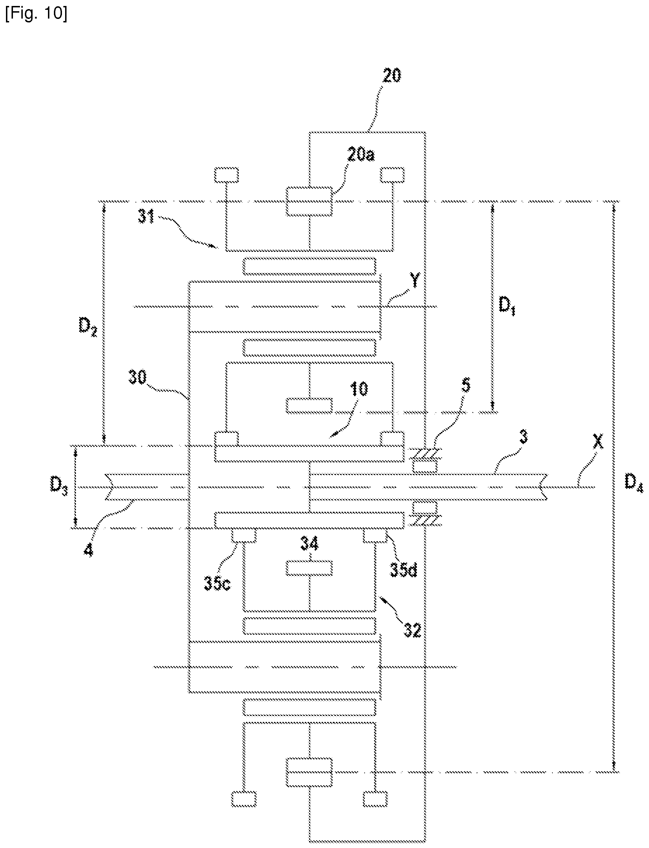

Bien que, dans ces trois premiers modes de réalisation, le train d'engrenages soit un train d'engrenages planétaire, dans lequel le porte-satellites 30 est fixe, il est également envisageable que le réducteur mécanique 6 comprenne plutôt un train d'engrenages épicycloïdal, dans lequel la couronne 20 soit solidaire du carter 5 et donc fixe, et le porte-satellites 30 soit solidaire de l'arbre de soufflante 4 en rotation, comme dans le quatrième mode de réalisation illustré sur la figure 9. Dans ce quatrième mode de réalisation, les autres éléments du réducteur 6 peuvent aussi être identiques ou au moins équivalents à ceux des modes de réalisation précédents et arrangés aussi de la même manière ou d'une manière analogue. Ils reçoivent en conséquence les mêmes signes de référence sur la figure 10 que sur les figures précédentes.

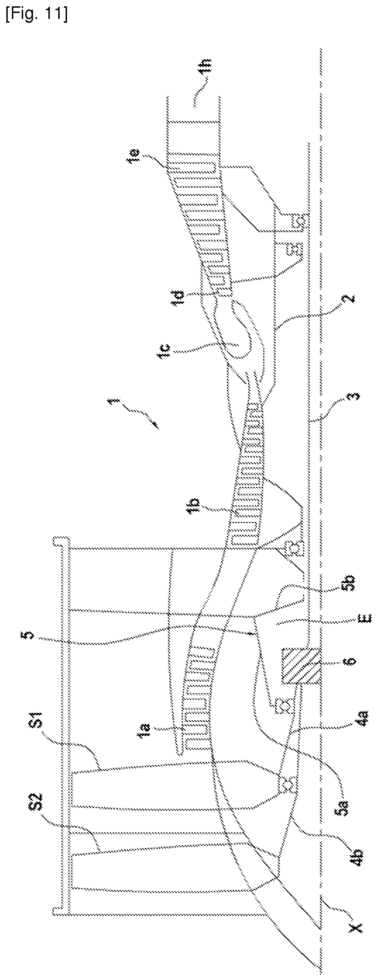

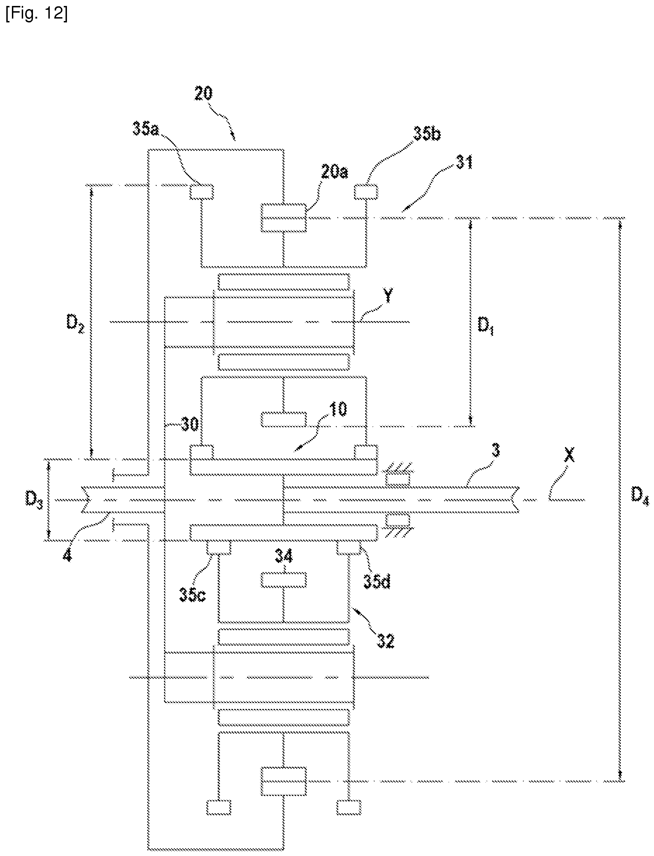

Il est par ailleurs aussi envisageable, en particulier pour une turbomachine 1 avec une soufflante S avec des aubages contre-rotatifs S1, S2, que le train d'engrenages soit un train d'engrenages différentiel. Comme illustré sur les figures 11 et 12, le solaire 10 pourrait alors être solidaire en rotation de l'arbre basse pression 3, la couronne 20 d'un premier arbre de soufflante 4a, et le porte-satellites 30 d'un deuxième arbre de soufflante 4b contre-rotatif. A part cela, dans ce cinquième mode de réalisation, les autres éléments du réducteur 6 peuvent aussi être identiques ou au moins équivalents à ceux des modes de réalisation précédents et arrangés aussi de la même manière ou d'une manière analogue. Ils reçoivent en conséquence les mêmes signes de référence sur les figures 11 et 12 que sur les figures précédentes.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Train d'engrenages pour réducteur mécanique (6) de turbomachine (1), ledit train d'engrenages comportant :
un solaire (10) ayant un axe central (X),
une couronne (20) disposée coaxialement autour du solaire (10),
un porte-satellites (30), et
une première et une deuxième pluralité de satellites (31,32), dans lesquelles chaque satellite (31,32) est soutenu par le porte-satellites (30) et comporte au moins une première denture (34 ; 34a, 34b) et deux deuxièmes dentures (35a-35d) décalées l'une par rapport à l'autre dans une direction axiale parallèle audit axe central (X),
chacune des premières dentures (34 ; 34a, 34b) étant engrenée avec la couronne (20) et ayant un premier diamètre médian (D₁), et
chacune des deuxièmes dentures (35a-35d) étant engrenée avec le solaire (10) et ayant un deuxième diamètre médian (D₂) supérieur au premier diamètre médian (D₁),
les deuxièmes dentures (35c, 35d) de la deuxième pluralité de satellites (32) étant disposées, dans ladite direction axiale, entre les deuxièmes dentures (35a, 35b) de la première pluralité de satellites (31).

2. Train d'engrenages suivant la revendication 1, dans lequel les deux deuxièmes dentures (35a-35d) de chaque satellite (31, 32) sont disposées symétriquement par rapport à un plan transversal (A) perpendiculaire à l'axe central (X).

3. Train d'engrenages suivant l'une quelconque des revendications 1 ou 2, dans lequel au moins un desdits satellites (31, 32) comporte une seule première denture (34) centrée sur le plan transversal (A).

4. Train d'engrenages suivant l'une quelconque des revendications 1 à 3, dans lequel au moins un desdits satellites (31, 32) comporte deux premières dentures (34a, 34b), disposées symétriquement par rapport au plan transversal (A).

5. Train d'engrenages suivant l'une quelconque des revendications 1 à 4, dans lequel les premières dentures (34 ; 34a, 34b) des satellites (31, 32) des première et deuxième pluralités de satellites (31, 32), les deuxièmes dentures (35a, 35b) des satellites (31) de la première pluralité de satellites (31), et les deuxièmes dentures (35c, 35d) des satellites (32) de la deuxième pluralité de satellites (32) comprennent des dentures droites et/ou des dentures hélicoïdales.

6. Train d'engrenages suivant la revendication 5, dans lequel deux desdites premières dentures (34a, 34b) de chaque satellite (31, 32), les deuxièmes dentures (35a, 35b) de chaque satellite (31) de la première pluralité de satellites (31), et/ou les deuxièmes dentures (35c, 35d) de chaque satellite (32) de la deuxième pluralité de satellites (32) sont hélicoïdales et inclinées dans des directions opposées.

7. Train d'engrenages suivant l'une quelconque des revendications précédentes, dans lequel chaque satellite (31, 32) des première et deuxième pluralités de satellites (31,32) est monté libre en rotation autour d'un axe correspondant (Y) à l'aide d'un palier (33) respectif.

8. Train d'engrenages suivant l'une quelconque des revendications précédentes, dans lequel chaque satellite (31, 32) des première et deuxième pluralités de satellites (31,32) comporte au moins deux parties (31a,31b,31c) fixées l'une à l'autres en rotation avec des profils non-axisymétriques (34) complémentaires.

9. Réducteur mécanique (6) de turbomachine (1) comprenant un train d'engrenages suivant l'une quelconque des revendications précédentes, au moins un arbre d'entrée (3) couplé mécaniquement en rotation à l'un parmi le solaire (10), la couronne (20), et le porte-satellites (30), et un arbre de sortie (4) couplé mécaniquement en rotation à un autre parmi le solaire (10), la couronne (20) et le porte-satellites (30).

10. Turbomachine (1) comportant un réducteur mécanique (6) de turbomachine (1) suivant la revendication 9, au moins une turbine (1e) et un dispositif rotatif, dans laquelle l'au moins une turbine (1e) est couplée mécaniquement en rotation à l'au moins un arbre d'entrée (3) du réducteur mécanique (6) et le dispositif rotatif est couplé mécaniquement en rotation à l'arbre de sortie (4).

11. Turbomachine (1) suivant la revendication 10, dans laquelle le dispositif rotatif est une soufflante (S).

## Patentansprüche

1. Zahnradgetriebe für eine mechanische Untersetzung (6) einer Turbomaschine (1), wobei das Zahnradgetriebe beinhaltet:
ein Sonnenrad (10), das eine Mittelachse (X) aufweist,
ein Hohlrad (20), das koaxial um das Sonnenrad (10) herum angeordnet ist,
einen Planetenträger (30), und
eine erste und eine zweite Vielzahl von Planetenrädern (31,32), wobei jedes Planetenrad (31, 32) von dem Planetenträger (30) gehalten wird und zumindest eine erste Verzahnung (34; 34a, 34b) und zwei zweite Verzahnungen (35a-35d) umfasst,
die relativ zueinander in einer axialen Richtung parallel zu der Mittelachse (X) versetzt sind,
wobei jede der ersten Verzahnungen (34; 34a, 34b) mit dem Zahnkranz (20) in Verzahnung steht und einen ersten medianen Durchmesser (D1) aufweist, und
jede der zweiten Verzahnungen (35a-35d) mit dem Sonnenrad (10) in Verzahnung steht und einen zweiten medianen Durchmesser (D2) aufweist, der größer als der erste mediane Durchmesser (D1) ist,
wobei die zweiten Verzahnungen (35c, 35d) der zweiten Vielzahl von Planetenrädern (32) in der axialen Richtung zwischen den zweiten Verzahnungen (35a, 35b) der ersten Vielzahl von Planetenrädern (31) angeordnet sind.

2. Zahnradgetriebe nach Anspruch 1, wobei die zwei zweiten Verzahnungen (35a-35d) eines jeden Planetenrads (31, 32) symmetrisch in Bezug auf eine querverlaufende Ebene (A) senkrecht zu der Mittelachse (X) angeordnet sind.

3. Zahnradgetriebe nach einem der Ansprüche 1 oder 2, wobei zumindest eines der Planetenräder (31, 32) eine einzige erste Verzahnung (34) umfasst, die auf der querverlaufenden Ebene (A) zentriert ist.

4. Zahnradgetriebe nach einem der Ansprüche 1 bis 3, wobei zumindest eines der Planetenräder (31, 32) zwei erste Verzahnungen (34a, 34b) umfasst, die symmetrisch in Bezug auf die querverlaufende Ebene (A) angeordnet sind.

5. Zahnradgetriebe nach einem der Ansprüche 1 bis 4, wobei die ersten Verzahnungen (34; 34a, 34b) der Planetenräder (31, 32) der ersten und zweiten Vielzahl von Planetenrädern (31, 32), die zweiten Verzahnungen (35a, 35b) der Planetenräder (31) der ersten Vielzahl von Planetenrädern (31) und die zweiten Verzahnungen (35c, 35d) der Planetenräder (32) der zweiten Vielzahl von Planetenrädern (32) gerade und/oder schräge Verzahnungen umfassen.

6. Zahnradgetriebe nach Anspruch 5, wobei zwei der ersten Verzahnungen (34a, 34b) eines jeden Planetenrads (31, 32), die zweiten Verzahnungen (35a, 35b) eines jeden Planetenrads (31) der ersten Vielzahl von Planetenrädern (31) und/oder die zweiten Verzahnungen (35c, 35d) eines jeden Planetenrads (32) der zweiten Vielzahl von Planetenrädern (32) schräg und in entgegengesetzte Richtungen geneigt sind.

7. Zahnradgetriebe nach einem der vorhergehenden Ansprüche, wobei jedes Planetenrad (31, 32) der ersten und zweiten Vielzahl von Planetenrädern (31, 32) mithilfe eines jeweiligen Lagers (33) freidrehend um eine entsprechende Achse (Y) montiert ist.

8. Zahnradgetriebe nach einem der vorhergehenden Ansprüche, wobei jedes Planetenrad (31, 32) der ersten und zweiten Vielzahl von Planetenrädern (31, 32) zumindest zwei Teile (31a, 31b, 31c) umfasst, die mit komplementären, nicht achsensymmetrischen Profilen (34) drehbar aneinander befestigt sind.

9. Mechanische Untersetzung (6) einer Turbomaschine (1), umfassend ein Zahnradgetriebe nach einem der vorhergehenden Ansprüche, zumindest eine Eingangswelle (3), die mechanisch zur Drehung mit einem von dem Sonnenrad (10), dem Hohlrad (20) und dem Planetenträger (30) gekoppelt ist, und eine Ausgangswelle (4), die mechanisch zur Drehung mit einem anderen von dem Sonnenrad (10), dem Hohlrad (20) und dem Planetenträger (30) gekoppelt ist.

10. Turbomaschine (1), die eine mechanische Untersetzung (6) für eine Turbomaschine (1) nach Anspruch 9, zumindest eine Turbine (1e) und eine drehende Vorrichtung beinhaltet, wobei zumindest eine Turbine (1e) mechanisch zur Drehung mit zumindest einer Eingangswelle (3) der mechanischen Untersetzung (6) gekoppelt ist und die drehende Vorrichtung mechanisch zur Drehung mit der Ausgangswelle (4) gekoppelt ist.

11. Turbomaschine (1) nach Anspruch 10, wobei die drehende Vorrichtung ein Gebläse (S) ist.

## Claims

1. A gear train for a mechanical reducer (6) for a turbomachine (1), said gear train including:
a sun gear (10) having a central axis (X),
a ring gear (20) disposed coaxially around the sun gear (10),
a planet carrier (30), and
a first and a second plurality of planet gears (31,32), in which each planet gear (31,32) is supported by the planet carrier (30) and includes at least one first gearing (34; 34a, 34b) and two second gearings (35a-35d) offset with respect to one another in an axial direction, parallel to said central axis (X),
each of the first gearings (34; 34a, 34b) meshing with the ring gear (20) and having a first median diameter (D1), and
each of the second gearings (35a-35d) meshing with the sun gear (10) and having a second median diameter (D2) greater than the first median diameter (D1), the second gearings (35c, 35d) of the second plurality of planet gears (32) being disposed, in said axial direction, between the second gearings (35a, 35b) of the first plurality of planet gears (31).

2. The gear train as claimed in claim 1, wherein the two second gearings (35a-35d) of each planet gear (31, 32) are disposed symmetrically with respect to a transverse plane (A) perpendicular to the central axis (X).

3. The gear train as claimed in any of claims 1 or 2, wherein at least one of said planet gears (31, 32) includes a single first gearing (34) centered on the transverse plane (A).

4. The gear train as claimed in any of claims 1 to 3, wherein at least one of said planet gears (31, 32) includes two first gearings (34a, 34b), disposed symmetrically with respect to the transverse plane (A).

5. The gear train as claimed in any of claims 1 to 4, wherein the first gearings (34; 34a, 34b) of the planet gears (31, 32) of the first and second pluralities of planet gears (31, 32), the second gearings (35a, 35b) of the planet gears (31) of the first plurality of planet gears (31), and/or the second gearings (35c, 35d) of the planet gears (32) of the second plurality of planet gears (32) comprise straight-cut gearings and/or helical gearings.

6. The gear train as claimed in claim 5, wherein two of said first gearings (34a, 34b) of each planet gear (31, 32), the second gearings (35a, 35b) of each planet gear (31) of the first plurality of planet gears (31), and/or the second gearings (35c, 35d) of each planet gear (32) of the second plurality of planet gears (32) are helical and inclined in opposite directions.

7. The gear train as claimed in any of the preceding claims, wherein each planet gear (31, 32) of the first and second pluralities of planet gears (31,32) is mounted to rotate freely about a corresponding axis (Y) using a respective bearing (33).

8. The gear train as claimed in any of the preceding claims, wherein each planet gear (31, 32) of the first and second pluralities of planet gears (31,32) includes at least two parts (31a,31b,31c) rotationally attached to one another with complementary non-axisymmetric profiles (34).

9. A mechanical reducer (6) for a turbomachine (1) comprising a gear train as claimed in any of the preceding claims, at least one input shaft (3) mechanically rotationally coupled to one from among the sun gear (10), the ring gear (20), and the planet carrier (30), and an output shaft (4) mechanically rotationally coupled to another one from among the sun gear (10), the ring gear (20), and the planet carrier (30).

10. A turbomachine (1) including a mechanical reducer (6) for a turbomachine (1) as claimed in claim 9, at least one turbine (1e) and a rotary device, wherein the at least one turbine (le) is mechanically rotationally coupled to the at least one input shaft (3) of the mechanical reducer (6) and the rotary device is mechanically rotationally coupled to the output shaft (4).

11. The turbomachine (1) as claimed in claim 10, wherein the rotary device is a fan (S).
